# EUROPEAN PATENT APPLICATION

(11) **EP 4 606 710 A1**
(43) Date of publication of application: **27.08.2025**
(21) Application number: 25157712.8
(22) Date of filing: 13.02.2025
(51) Int. Cl.: B64F 1/26

(54) **MODULE FOR MAKING DEFLECTING BARRIERS CONFIGURED TO DEFLECT THE JET OF AIR GENERATED BY AEROPLANE ENGINES**

(30) Priority: 26.02.2024 IT 202400003937
(71) Applicant: LSE S.r.l., 24040 Pontirolo Nuovo (Bergamo) (IT)
(72) Inventor: DIANI, Andrea, 24040 PONTIROLO NUOVO (BERGAMO) (IT); PAGANESSI, Roberto, 24040 PONTIROLO NUOVO (BERGAMO) (IT)
(74) Representative: Girometti, Emiliano

(57) **Abstract**

Module (100) for making deflecting barriers (1) configured to deflect the jet of air generated by aeroplane engines. The module (100) comprises a supporting frame (300) which can be anchored to the ground and a deflecting surface (200), curved and inclined with respect to the ground and fixed in front of the supporting frame (300). The deflecting surface (200) exhibits an alternating succession of horizontal grooves (201) and reliefs (202) and a plurality of through holes (203) distributed on the deflecting surface (200) according to a predetermined pattern.

## Description

The present invention relates to the field of aviation and has as its subject matter a module for making deflecting barriers configured to deflect the jet of air generated by aeroplane engines. The present invention also relates to a deflecting barrier comprising such a module.

In the field covered by the present invention, deflecting barriers configured to deflect the jet of air generated by aeroplane engines are known to protect people, vehicles and structures from the strong currents produced during take-off and landing operations and, in particular, during maintenance and testing operations.

According to an example of a the prior art, barriers are made up of modules anchored in the ground and mutually placed side by side in such a way as to define a back. Each module essentially comprises a supporting frame, anchored to the ground, and a deflecting surface, rigidly fixed to the supporting frame and supported by it.

Typically, the deflecting surface can be perpendicular to the ground (i.e. it extends vertically) in such a way as to brake the air jet, or inclined with respect to the ground in such a way as to progressively deflect the air jet upwards. Typically, the deflecting surface can be straight or curved. Commonly, the deflecting surface also extends without substantial interruptions.

The Applicant has noted that, even in their most modern implementations, the systems described above have certain structural and functional disadvantages, which are closely interconnected, and their use entails some drawbacks.

Firstly, due to the structure of the deflecting surface, the deflected air jet exerts considerable pressure on the deflecting surface and, consequently, on the entire module structure.

Consequently, both the deflecting surface and the supporting frame must be made of robust and expensive materials in order to ensure the necessary structural strength. This requirement results in a significant increase in production costs, as the deflecting surface must be made of high-quality materials and/or must be designed with a high thickness. Likewise, the supporting frame must be oversized to withstand the forces involved and must therefore also be made of resistant materials, further increasing the overall cost of the deflecting barriers. Similarly, the anchoring to the ground must also be particularly strong in order to prevent possible detachment from the ground.

Secondly, due to the structure of the deflecting surface and/or phenomena such as turbulence and eddies, the deflecting barriers cannot deflect the flow optimally. Therefore, the deflecting barriers can be improved from an aerodynamic and fluid-dynamic point of view.

Again, due to the structure of the deflecting surface, the upward deflected air jet could result in the uplift of debris, stones or other objects on the ground, which could be dangerous if projected into the air. This poses a safety risk to people and aircraft in the vicinity.

In this context, the technical task of the present invention is therefore to make available a module for deflecting barriers configured to deflect the air jet generated by aeroplane engines as well as a deflecting barrier comprising such a module that are free from the drawbacks present in the prior art.

It is therefore the object of the present invention to provide a module for deflecting barriers configured to deflect the air jet generated by aeroplane engines as well as a deflecting barrier comprising such a module that have a simplified, less costly structure and at the same time are extremely high-performance.

A further purpose of the present invention is to provide a module for deflecting barriers configured to deflect the air jet generated by aeroplane engines as well as a deflecting barrier comprising such a module that improve the overall safety of the area in which they are installed.

The specified technical task and the specified objects are substantially achieved by a module for deflecting barriers configured to deflect the jet of air generated by aeroplane engines as well as a deflecting barrier comprising said module comprising the technical features set forth in the appended claims 1 and 15 respectively and/or in one or more of the claims dependent thereon and/or in the united description.

In particular, the Applicant has found that manufacturing a module for deflecting barriers comprising a supporting frame, which can be anchored to the ground, and a deflecting surface curved and inclined with respect to the ground, fixed in front of the supporting frame, wherein the deflecting surface exhibits an alternating succession of horizontal grooves and reliefs and a plurality of through holes distributed on said deflecting surface according to a predetermined pattern, makes it possible to reduce the pressure exerted by the air jet on the deflecting surface.

Advantageously, the presence of the holes results in a certain degree of air permeability, allowing air pressure to dissipate, at least partially, through them. Advantageously, the presence of grooves and reliefs alters the air flow, further dissipating its energy. Again, the presence of grooves and reliefs inherently strengthens the structure of the deflecting surface.

Therefore, the combination of grooves and reliefs and the plurality of holes allows the energy of the air jet to be partially dissipated, allowing for a simplification of the structure as a whole. These advantages result in an overall reduction in production and installation costs as well as greater functional efficiency of the structure.

Further features and advantages of the present invention will become clearer from the indicative and therefore non-limiting description of an embodiment of a module for deflecting barriers configured to deflect the air jet generated by aeroplane engines as well as a deflecting barrier comprising such a module.

Such description will be set forth herein below with reference to the accompanying drawings, provided for merely indicative and therefore non-limiting purposes, wherein:
- Figures 1 and 1A show a schematic side view and a detail of a preferred, illustrative and therefore non-limiting embodiment of a module for making deflecting barriers configured to deflect the air jet generated by aeroplane engines according to the present invention;
- Figure 2 shows a schematic perspective view of the embodiment of the supporting frame of the module in Figure 1;
- Figure 3 shows a front schematic view of the embodiment of the supporting frame of the module in Figure 1;
- Figures 4 and 5 show respective schematic views of a preferred embodiment of a portion of the deflecting surface of the module in Figure 1;
- Figure 6 shows a schematic plan view of a preferred embodiment of a deflecting barrier according to the present invention;
- Figure 7 shows a schematic side view of a preferred, illustrative and therefore non-limiting embodiment of a secondary module of the deflecting barrier in Figure 6;
- Figure 8 shows a front schematic view of the embodiment of the supporting frame of the secondary module in Figure 7.

With reference to the accompanying figures, a module for making deflecting barriers 1 configured to deflect the jet of air generated by aeroplane engines has been indicated with numerical reference 100.

The term "jet" refers to high-speed, high-pressure airflow produced by aeroplane engines, typically jet engines, during take-off, landing and/or during maintenance and testing operations.

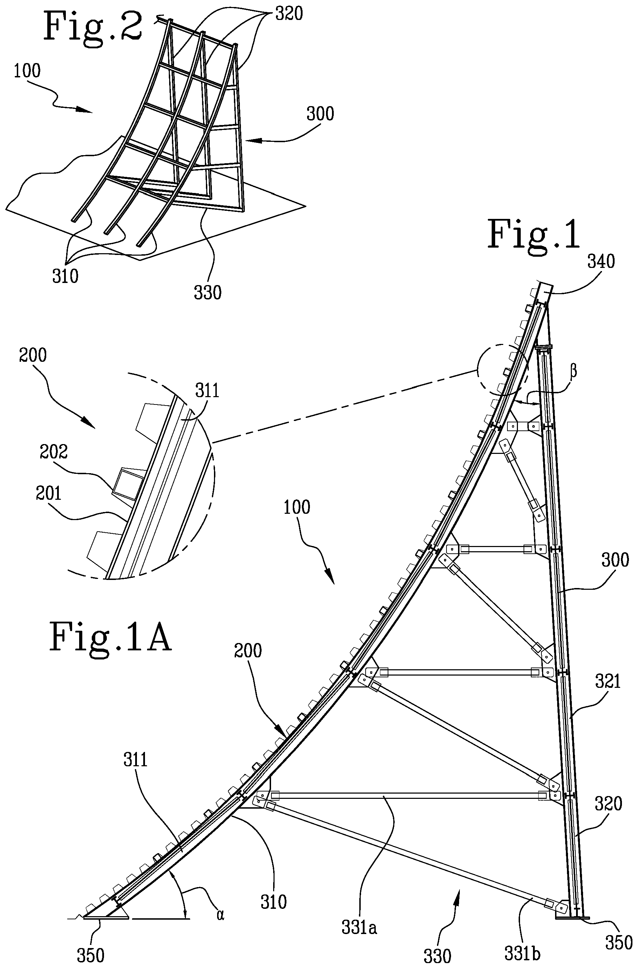

As can be seen from Figure 1, the module 100 comprises a supporting frame 300 and a front deflecting surface 200, rigidly fixed to the supporting frame in a front portion thereof.

In the context of the present invention, the term "front" is intended to mean that, in a use configuration, the deflecting surface 200 is positioned frontally with respect to the direction of the air jet. In other words, in use, the deflecting surface 200 is placed in front of the aeroplane engine exhaust and is interposed between the produced air jet and the supporting frame 200. The module 100 described here, therefore, finds particular (but not limiting) application in the embodiment of deflecting barriers 1 that are placed in front of the exhaust of aeroplanes.

The module 100 has a transverse extension comprised between 2 metres and 4 metres, preferably comprised between 2.5 metres and 3.5 metres.

The module 100 has a height comprised between 3 metres and 8 metres, preferably between 4 metres and 6 metres.

With reference to the deflecting surface 200, it extends in a substantially continuous manner. In other words, the deflecting surface 200 can be made as a single piece or by assembling several elements side-by-side and mutually connected, but without any substantial gaps or interruptions, According to an aspect of the present invention, the deflecting surface 200 is curved. The term "curved" means that the deflecting surface 200 has a concavity facing, in use, towards the air jet.

The curvature of the deflecting surface 200 can have different embodiments.

According to a preferred embodiment, the deflecting surface 200 is shaped like the arc of a circle. In other words, as can be seen in Figure 1, according to a side view of the module 100, the deflecting surface 200 has a profile shaped like the arc of a circle. In particular, the deflecting surface 200 may have a radius of curvature comprised between 5 metres and 20 metres, preferably between 7 metres and 14 metres.

According to an alternative embodiment not illustrated, the deflecting surface 200 has a parabolic shape. In other words, in accordance with a side view of the module 100, the deflecting surface 200 may have a parabolic profile.

According to further embodiments not illustrated, the deflecting surface 200 has an irregular curved shape. In other words, in accordance with a side view of the module 100, the deflecting surface 200 may have a complex curved profile that cannot be traced back to the arc of a circle or parabola.

Advantageously, this technical feature offers better aerodynamics, distributing the air jet evenly and ensuring structural stability.

According to an aspect of the present invention, the deflecting surface 200 is inclined with respect to the ground. In other words, the deflecting surface 200 is not vertical or perpendicular to the ground but defines a certain angle with respect to the ground, so as to deflect the air jet upwards.

In particular, as can be seen in Figure 1, the deflecting surface defines 200 with the ground a hitch angle α with the ground comprised between 20° and 50°, preferably between 30° and 40°.

Advantageously, this technical feature allows a more efficient deflection of the air jet upwards, reducing noise, turbulence and environmental impact.

According to an aspect of the present invention, as illustrated in Figures 1 and 1a, the deflecting surface 200 has an alternating succession of horizontal grooves 201 and reliefs 202. In other words, the deflecting surface 200 is defined by a regular succession of recesses and protuberances.

Preferably, the grooves 201 and reliefs 202 extend continuously along a transverse dimension of the module 100. In other words, each groove 201 and each relief 202 run horizontally without significant interruptions along the transverse dimension of the deflecting surface 200.

Preferably, the grooves 201 and reliefs 202 have a complementary profile. In other words, the grooves 201 and reliefs 202 have shapes that complement each other or fit together. For example, if a groove 201 has a concave shape, the adjacent relief 202 will have a convex shape that perfectly matches the concavity of the groove 201.

Preferably, the grooves 201 have a depth (relative to a ridge of the relief 202) comprised between 30 mm and 80 mm, preferably comprised between 40 mm and 65 mm.

Preferably, the grooves 201 have a width comprised between 40 mm and 100 mm, preferably comprised between 50 mm and 90 mm. The term "width" refers to the distance between two successive reliefs 202.

According to a first embodiment, the grooves 201 and reliefs 202 have a squared profile.

According to a non-illustrated embodiment, the grooves 201 and reliefs 202 have an undulated profile.

According to further embodiments not illustrated, the grooves 201 and reliefs 202 can have a regular alternation of squared and undulated profiles.

Preferably, the deflecting surface 202 has a thickness comprised between 0.8 mm and 10 mm, even more preferably comprised between 1 mm and 1.5 mm.

Advantageously, these technical features help dissipate some of the energy of the air jet through increased turbulence or reduced air jet speed. This could help reduce the noise generated by the air jet of aeroplane engines or minimise the undesirable effects of air flow on the surrounding ground. Advantageously, these technical features also help to reduce the so-called "projectile effect", i.e. the risk of possible debris or pebbles being lifted into the air by the deflecting surface 200.

According to a preferred embodiment of the module 100, the deflecting surface 200 comprises a panelling defined at least partially by one or more corrugated metal sheets.

According to an aspect of the present invention, as shown in Figure 2, the deflecting surface 200 has a plurality of through holes 203 distributed on the deflecting surface 200 according to a predetermined pattern.

In the context of the present invention, the term "predetermined pattern" means that the holes 203 are distributed on the deflecting surface 200 according to a predetermined and regular pattern or design.

Preferably, the holes 203 are distributed according to the above predetermined pattern substantially over the entire deflecting surface 200. In other words, substantially the entire deflecting surface 200 has the plurality of through holes 203.

Preferably, the holes are circular in shape and have a diameter comprised between 1 mm and 20 mm, preferably comprised between 2 mm and 6 mm, even more preferably 3 mm.

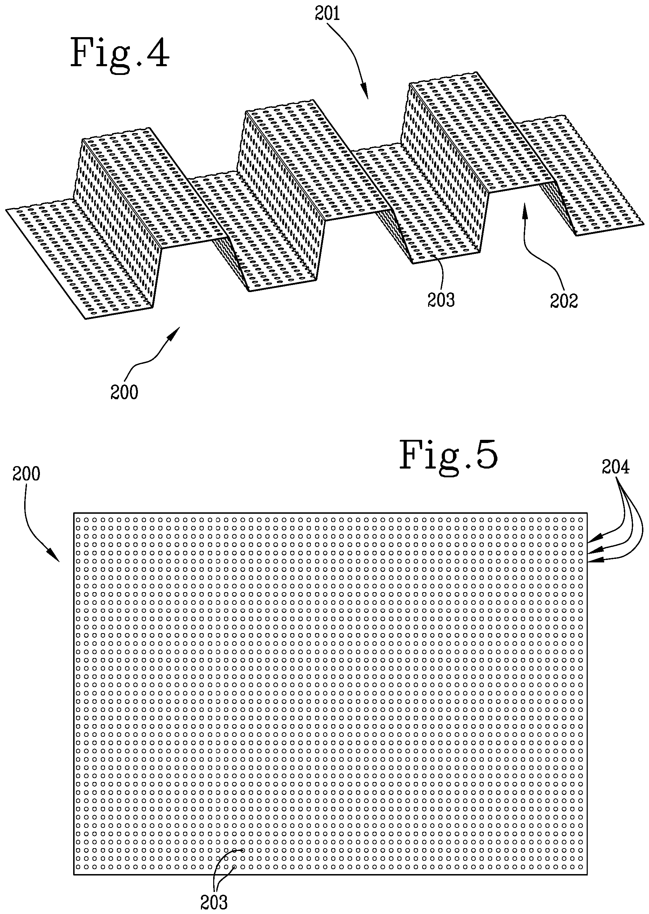

According to the exemplary embodiment shown in Figures 4 and 5, the holes are distributed along a plurality of rows 204 extending side by side along the transverse dimension of the deflecting surface 200.

Preferably, the holes 203 in each row 204 are mutually spaced at a regular pitch comprised between 2 mm and 15 mm, preferably comprised between 3 mm and 10 mm, even more preferably 5 mm.

Preferably, the rows 204 of holes 203 are mutually spaced at a pitch comprised between 2 mm and 15 mm.

Preferably, the holes 203 define a void-to-full percentage on the deflecting surface 200 comprised between 10% and 50%; even more preferably comprised between 25% and 38%.

Advantageously, these features help to dissipate some of the energy of the air jet so as to reduce stress on the structure of the module 100. In fact, the holes 203 make the deflecting surface 200 partially permeable to air, reducing the force of the air jet. The reduced air jet pressure helps minimise structural stress on the deflecting surface 200 itself, prolonging its life and reducing the need for maintenance or replacement. In addition, decreasing the speed of the air jet can help reduce the noise and turbulence generated by the jet itself, improving acoustic comfort in the vicinity.

The combination of the technical features introduced here, in particular the curved and sloping conformation of the deflecting surface 200 as well as the presence of grooves 201, reliefs 202 and through holes 203 synergistically combine to make the module 100 extremely high-performance.

In addition, these technical features contribute synergistically to reducing the load exerted by the air jet on the structure of the module 100; it is possible to provide a less costly structure thanks to a less complex architecture, less expensive materials and lighter, less heavy components. This results in lower production and installation costs for the deflecting surface 1, helping to make the project more economical and affordable overall. In addition, a lighter and less structurally demanding structure can bring additional benefits such as greater flexibility in the position and installation of the deflecting barrier 1, allowing for greater versatility in adapting to site-specific requirements and environmental conditions.

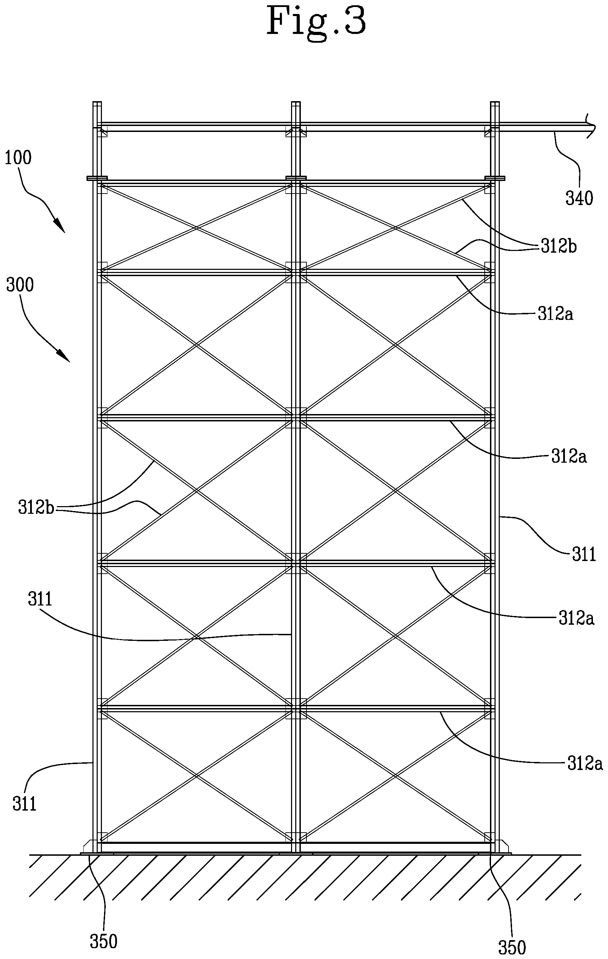

With regard now to the supporting frame 300, Figures 1, 2 and 3 show a preferred, illustrative and therefore non-limiting embodiment of a supporting frame 300 according to the present invention.

The supporting frame 300 comprises a front assembly 310 provided with at least two front uprights 311 to support the deflecting surface 200: the front uprights 311 are curved and substantially counter-shaped to the deflecting surface 200. In the preferred embodiment, the front assembly 310 comprises three front uprights 311.

Preferably, the front uprights 311 are fixed to the rear of the deflecting surface 200 with respect to the direction of the air jet.

Preferably, the front 311 uprights are mutually parallel.

Preferably, the front assembly 310 further comprises a plurality of respective connecting elements 312a, 312b configured to mutually connect the front uprights 311 and reinforce the supporting frame 300 overall. These connecting elements 312 may be transverse elements 312a or diagonally braced elements 312b.

According to an example embodiment, the front uprights 311 are made by means of calendared profile beams.

According to an embodiment, the transverse elements 312a are made by means of beams with a calendered profile.

According to an embodiment, the braced diagonal elements are made by means of diagonal rods.

The supporting frame 300 further comprises a rear assembly 320 rigidly attached to the front assembly 310 in an upper portion of the supporting frame 300, as clearly visible in Figure 1.

The front assembly 310 and the rear assembly 320 define an angle β comprised between 10° and 40°, preferably between 15° and 25°.

Preferably, as can be seen in Figure 1, according to a side view of the module 100, the front assembly 310 together with the rear assembly 320 defines a substantially triangular shape.

The rear assembly 320 is provided with at least two rear uprights 321. In the preferred embodiment, the rear assembly 320 comprises three rear uprights 321.

Preferably, the rear uprights 321 are mutually parallel.

According to a preferred embodiment, the rear uprights 321 extend vertically. In other words, the rear uprights 321 extend perpendicularly to the ground.

According to embodiments not illustrated, the rear uprights 321 are instead inclined to the ground.

According to a preferred embodiment, the rear uprights 321 are straight.

According to alternative embodiments not shown, the rear uprights 321.

Preferably, the rear assembly 320 further comprises a plurality of respective connecting elements (not illustrated) configured to mutually connect the rear uprights 321 and reinforce the supporting frame 300 overall. These connecting elements may be transverse elements or diagonally braced elements.

According to an embodiment, the rear uprights 321 are made by means of beams with a calendered profile.

According to an embodiment, the transverse elements are made by means of beams with a calendered profile.

According to an embodiment, the braced diagonal elements are made by means of diagonal rods.

According to an aspect, as shown in Figure 1, the supporting frame 300 may further comprise a connecting assembly 330 having a plurality of transverse elements 331a and diagonally braced elements 331b configured to connect the front assembly with the rear assembly.

Preferably, the transverse elements 331a and braced diagonal elements 331b are made of calendered profiles or diagonal rods.

According to an aspect, the supporting frame 300 comprises an upper crossbar 340 to which the front assembly 310 and the rear assembly 320 are fixed: in particular, the front uprights 311 and the rear uprights 321 are rigidly fixed to the upper crossbar 340.

Preferably, the upper crossbar 340 is configured to be connectable to the upper crossbar 340 of at least one adjacent module 100 according to an unambiguous and predetermined positioning.

Preferably, the upper crossbar 340 has opposite ends that can both be connected to respective upper crossbars 340 of two adjacent modules 100 arranged on opposite sides of the module 100.

According to an aspect, the supporting frame 300 has ground anchoring plates 350, which comprise through holes for housing the fixing elements.

Preferably, in this description, the term "fixing elements" means threaded rods used to anchor the anchoring plates 350 to the ground. Preferably, a chemical anchor, such as epoxy resin, can also be used alongside the threaded rods.

In the preferred embodiment, each of the front uprights 310 and the rear uprights 320 has a respective anchoring plate 350.

Advantageously, the supporting frame 300 features a robust, strong, lightweight and extremely simplified design.

The robustness and strength of the supporting frame 300 ensure long-term stability and durability, guaranteeing the safety and reliability of the deflecting barrier 1 over time. At the same time, the light weight of the supporting frame 300 reduces the overall weight of the module 100, making it easier to transport, install and handle. The simplified structure of the supporting frame 300 not only reduces production and maintenance costs, but also simplifies the assembly and installation processes, accelerating project turnaround time and minimising wasted resources. In addition, a simplified structure can offer greater design flexibility and better adaptability to various environmental conditions and site-specific requirements, providing an effective and efficient solution for deflecting the air jet generated by aeroplane engines.

Advantageously, simplified anchorages reduce complexity and installation costs, speeding up project completion time and reducing wasted resources. These technical features combined ensure an overall efficient and reliable system.

The present invention also relates to a deflecting barrier 1 configured to deflect the air jet generated by an aeroplane engine, comprising a plurality of said modules 100 according to the present invention.

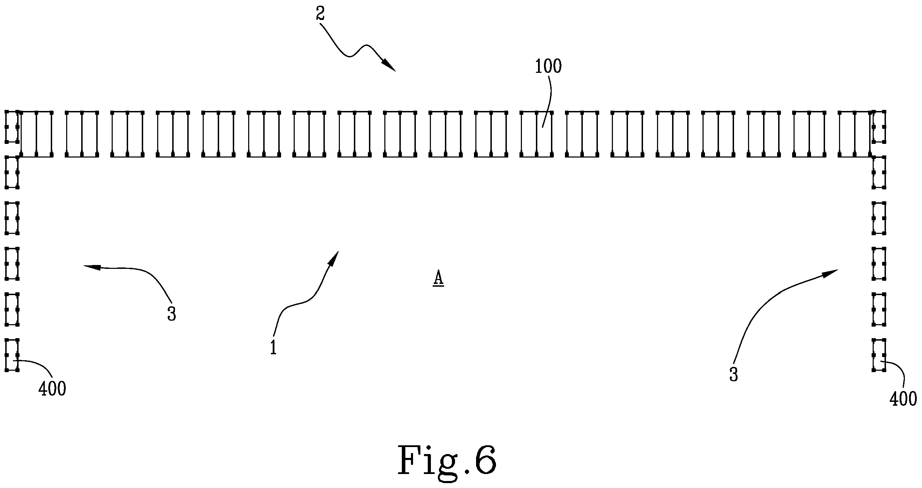

Figure 6 shows a plan view of a preferred embodiment of the barrier according to the present invention.

In this embodiment, the deflecting barrier 1 is substantially U-shaped. The deflecting barrier 1 therefore defines at least a partial containment zone "A" of an aeroplane. In particular, the deflecting barrier 1 has a central row 2 which, in use, is arranged frontally to the exhaust of an aeroplane's engines, and two side branches 3 which, in use, are arranged laterally to the exhaust of an aeroplane's engines.

As for the central row 2, it is defined by a plurality of modules 100 side by side. In other words, the central row 2 comprises a plurality of mutually flanked and mutually oriented modules 100. Specifically, the modules 100 are anchored to the ground by means of the aforementioned fixing elements, in a mutually flanked position. Preferably, the adjacent modules 100 are mutually constrained by their respective upper crossbars 340.

According to an aspect, the adjacent modules 100 are mutually arranged at a distance comprised between 0.50 metres and 3 metres, preferably comprised between 1 metre and 2 metres.

As for the side branches 3, they are preferably symmetrical and extend perpendicularly from the opposite ends of the central row 2.

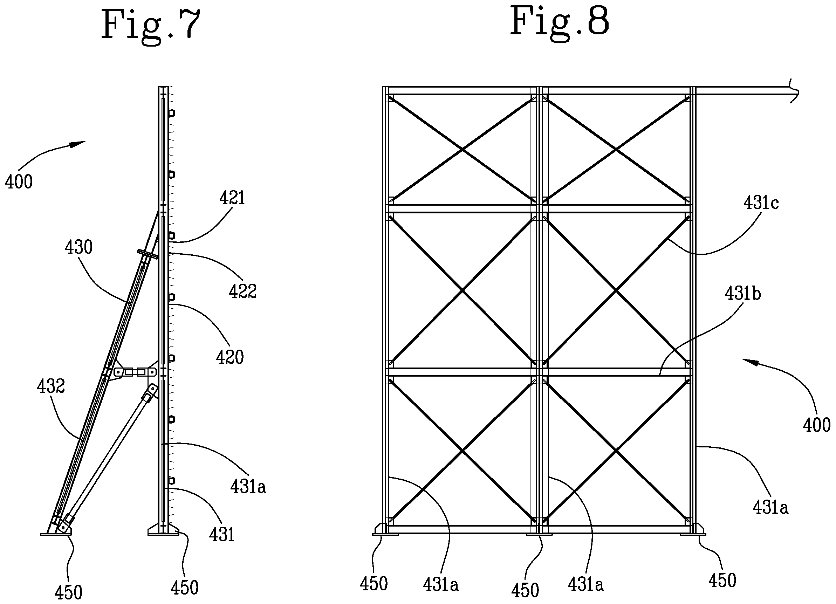

Each side branch 3 is defined by a plurality of secondary modules 400 side by side, the preferred embodiment of which is illustrated for illustrative purposes in Figures 7 and 8.

This secondary module 400 comprises a respective supporting frame 300 which can be anchored to the ground by means of an anchoring plate 450 and a respective deflecting surface 420, fixed at the front of the supporting frame 430.

The secondary module 400 has a transverse extension comprised between 2 metres and 4 metres, preferably between 2.5 metres and 3.5 metres.

The secondary module 400 has a height comprised between 3 metres and 8 metres, preferably between 4 metres and 6 metres.

The deflecting surface 420 of the secondary module 400 is essentially rectilinear and arranged vertically to the ground.

The deflecting surface 420 of the secondary module 400 has a structure substantially equivalent to the deflecting surface 200 of the module 100, except for the curvature. The deflecting surface 420 has an alternating succession of horizontal grooves 421 and reliefs 422 and a plurality of through holes (not illustrated) distributed on the deflecting surface 420 according to a predetermined pattern.

In addition, the deflecting surface 420 of the secondary module 400 comprises one or more of the technical features described above with reference to the deflecting surface 200 of the module 100.

Now with reference to the 430 supporting frame of the secondary module 400, it too has technical characteristics substantially equivalent to the supporting frame 300 of the module 100.

In particular, the secondary module 400 differs from the module 100 in that it comprises a substantially vertical front assembly 431 and therefore comprising straight front uprights 431a and in that it comprises a rear assembly 432 inclined with respect to the ground, as clearly visible in Figure 5.

The front assembly 431 of the secondary module 400 further comprises a plurality of transverse elements 431b and braced diagonal elements 431c configured to mutually connect the front uprights 431a.

The rear assembly 432 also comprises a respective plurality of transverse and diagonally braced elements configured to connect the rear uprights to one other.

The secondary modules 400, in use, are anchored to the ground and mutually flanked. In particular, the secondary modules 400 are arranged at a distance comprised between 0.5 metres and 3 metres, preferably comprised between 1 metre and 2 metres.

The present invention achieves the intended purposes overcoming the drawbacks of the prior art.

## Claims

1. Module (100) for making deflecting barriers (1) configured to deflect the jet of air generated by aeroplane engines, comprising a supporting frame (300) which can be anchored to the ground and a deflecting surface (200), curved and inclined with respect to the ground and fixed in front of the supporting frame (300);
**characterised in that** said deflecting surface (200) exhibits an alternating succession of horizontal grooves (201) and reliefs (202) and a plurality of through holes (203) distributed on said deflecting surface (200) according to a predetermined pattern.

2. Module (100) according to claim 1, wherein the holes (203) are distributed according to said predetermined pattern over the entire deflecting surface (200).

3. Module (100) according to claim 1 or 2, wherein the holes (203) are circular in shape and have a diameter comprised between 1 mm and 20 mm, preferably said holes having a diameter comprised between 2 mm and 6 mm.

4. Module (100) according to any one of the preceding claims, wherein the holes (203) define a void-to-full percentage on said deflecting surface (200) comprised between 10% and 50%; preferably, comprised between 25% and 38%.

5. Module (100) according to any one of the preceding claims, wherein said deflecting surface (200) has a thickness comprised between 0.8 mm and 10 mm, preferably, comprised between 1 mm and 1.5 mm.

6. Module (100) according to any one of the preceding claims, wherein the deflecting surface (200) has a radius of curvature comprised between 5 metres and 20 metres; preferably, comprised between 7 metres and 14 metres.

7. Module (100) according to any one of the preceding claims, wherein the deflecting surface (200) defines a hitch angle (α) with the ground comprised between 20° and 50°, preferably, comprised between 30° and 40°.

8. Module (100) according to any one of the preceding claims, wherein said grooves (201) and said reliefs (202) extend continuously along a transverse dimension of the module (100).

9. Module (100) according to any one of the preceding claims, wherein said grooves (201) and said reliefs (202) have a complementary profile, preferably squared.

10. Module (100) according to any one of the preceding claims, wherein the grooves (201) have a depth comprised between 30 mm and 80 mm, preferably comprised between 40 mm and 65 mm and/or a width comprised between 40 mm and 100 mm, preferably comprised between 50 mm and 90 mm.

11. Module (100) according to any one of the preceding claims, wherein said deflecting surface (200) comprises a panelling defined at least partially by one or more corrugated sheets, preferably made of metal.

12. Module (100) according to any one of the preceding claims, wherein the supporting frame (300) comprises:
- a front assembly (310) provided with at least two curved front uprights (311) mutually connected by means of a plurality of first connecting elements (312a, 312b) and configured to support said deflecting surface (200);
- a rear assembly (320) provided with at least two rear uprights (321) mutually connected by means of a plurality of second connecting elements, said rear assembly (320) being rigidly fixed to said front assembly (310) in an upper portion of the supporting frame (300).

13. Module (100) according to claim 12, wherein said supporting frame (300) comprises an upper crossbar (340) to which said front assembly (310) and said rear assembly (320) are fixed; preferably, said upper crossbar (340) being configured so as to be connectable to the upper crossbar (340) of at least one adjacent module (100) according to an unambiguous and predetermined positioning.

14. Module (100) according to any one of the preceding claims, having a transverse extension comprised between 2 metres and 4 metres, preferably comprised between 2.5 metres and 3.5 metres.

15. Deflecting barrier (1) configured to deflect the jet of air generated by aeroplane engines, comprising:
- a plurality of modules (100) according to any one of the preceding claims, mutually side-by-side and mutually oriented so as to define a central row (2) of said deflecting barrier (1), which is configured, in use, to be arranged in front of the engine exhaust of an aeroplane.

16. Deflecting barrier (1) according to claim 15, wherein the modules (100) are anchored to the ground and mutually constrained by means of the respective upper crossbars (350).

17. Deflecting barrier (1) according to claim 15 or 16, wherein the modules (100) are mutually spaced at a distance comprised between 0.5 metres and 3 metres, preferably, comprised between 1 metre and 2 metres.

18. Deflecting barrier (1) according to any one of the preceding claims 15 to 17, wherein said deflecting barrier (1) comprises two symmetrical side branches (3) extending perpendicularly on opposite ends of the central row (2); each side branch (3) comprising a plurality of secondary modules (400) each comprising a supporting frame (430) anchored to the ground and a deflecting surface (420), fixed in front of the respective supporting frame (430); said deflecting surface (420) having an alternating succession of horizontal grooves (421) and reliefs (422) and a plurality of through holes distributed on said deflecting surface (420) according to a predetermined pattern.
